# EUROPEAN PATENT APPLICATION

(11) **EP 4 468 616 A1**
(43) Date of publication of application: **27.11.2024**
(21) Application number: 24177825.7
(22) Date of filing: 24.05.2024
(51) Int. Cl.: H04B 7/024, H04B 7/06, H04J 11/00

(54) **SYSTEMS FOR AND METHODS FOR COORDINATED PARTIAL-RANK NULLING IN MULTI ACCESS POINT TRANSMISSION**

(30) Priority: 25.05.2023 US 202363504260 P; 27.10.2023 US 202318496473
(71) Applicant: Avago Technologies International Sales Pte. Limited, Singapore 768923 (SG)
(72) Inventor: Puducheri Sundaravaradhan, Srinath, Irvine, 92618 (US); Porat, Ron, Irvine, 92618 (US); Nassiri Toussi, Karim, Irvine, 92618 (US)
(74) Representative: Dilg, Haeusler, Schindelmann Patentanwaltsgesellschaft mbH

(57) **Abstract**

Technical solutions include systems and methods for coordinated partial-rank nulling in multi access point (AP) transmissions. A first AP can transmit to a second AP a message identifying a station of the first AP for which interference from the second AP is to be partially nulled and a direction in which the interference from the second AP is partially nulled. The first AP can receive from the second AP a message identifying a station of the second AP for which interference from the first AP is to be partially nulled and a direction in which the interference from the first AP is partially nulled at the second station. The first AP can configure settings to coordinate with the second AP a time and a frequency of a transmission to the first station to be sent according to the second direction to partially null the interference at the second station.

## Description

### FIELD OF THE DISCLOSURE

This disclosure generally relates to systems and methods for wireless communication between access points and wireless communication devices, including, without limitation communication reducing interference to unintended communication devices.

### BACKGROUND

Access points (APs), such as Wi-Fi routers, can facilitate wireless communication to any number of client wireless communication devices, also referred to as stations or STAs, such as, smartphones, tablets, computers. The stations or STAs can be within the wireless communication range of the APs and can have locations that are stationary or dynamic (e.g., moving) with respect to the AP. Sometimes, clients can experience interferences that can be caused by APs (e.g., within the same or a different wireless communication network) transmitting data to other clients or STAs. Such interferences can be exacerbated when network density is increased, and transmission opportunities are reduced.

### SUMMARY OF THE DISCLOSURE

The technical solutions provide systems and methods facilitating a multi-AP coordinated beamforming with nulling (CBF), in which APs can coordinate their wireless transmissions intended to the recipient stations by transmitting them in spatial directions or vectors along which interferences from these transmissions are partially nulled (e.g., minimized or reduced below an acceptable threshold) at unintended recipient clients. In a coordinated, partial-rank nulling, multiple APs can exchange their information with respect to STAs in their respective basic service sets (BSSs), such as wireless devices configured to utilize their wireless local area networks (WLANs). APs can determine directions along which interferences from particular transmitting APs can be partially nulled (e.g., attenuated, minimized or reduced to below an acceptable level in one or more directions) at the STAs that are not intended recipients of these transmissions. The transmitting APs can then, based on the information and determined directions, configure and beamform the spatial data streams to transmit to the intended STAs, according to the directions along which the interferences from those transmitted data streams are partially nulled at the unintended recipient STAs. As a result, multiple APs can transmit their spatial streams simultaneously and within the same frequency ranges (e.g., same channels), without experiencing interferences that reduce their transmission throughput and cause latency and delays.

At least one aspect is directed to a system. The system can include a first access point (AP). The first AP can be configured to generate for a second AP, a first message. The first message can identify a first station of the first AP for which interference from the second AP is to be partially nulled. The first AP can be configured to receive, from the second AP, a second message. The second message can identify a second station of the second AP for which interference from the first AP is to be partially nulled. The first AP can be configured to determine, responsive at least to the second message, a first direction in which the interference at the first station from the second AP is partially nulled and a second direction in which the interference at the second station from the first AP is partially nulled. The first AP can be configured to set up or configure one or more settings of the first AP to coordinate with the second AP a time and a frequency of a transmission to the first station to be sent according to the second direction to partially null the interference at the second station.

The system can include the first AP configured to transmit, to the first station at the time and the frequency, a first spatial stream of data. The first spatial stream of data can include the transmission. The first spatial stream of data can be oriented along a direction to partially null the interference at the second station and along the second direction. The first stream of data can be coordinated with a second stream of data transmitted by the second AP to the second station at the time and frequency along a direction to partially null the interference at the first station and along the first direction.

The system can include the first station that is configured to receive wireless transmissions from the first AP via the wireless local area network (WLAN) of the first AP. The second station can be configured to receive wireless transmissions from the second AP via the WLAN of the second AP. The first station and the second station can each be located within a first range of the wireless transmissions from the first AP and a second range of the wireless transmissions from the second AP.

The system can include the first AP configured to transmit, to the first station at the time and the frequency, a first spatial stream of data comprising the transmission. The first spatial stream of data oriented along a third direction to partially null the interference at the second station and along the second direction. The second AP can be configured to transmit, to the second station at the time and the frequency, a second spatial stream of data comprising a second transmission. The second spatial stream of data can be oriented along a fourth direction to partially null the interference at the first station and along the first direction. The first AP can be configured to determine, based at least on the second direction, a spatial orientation of the signal transmitted from one or more antennas of the first AP. The first AP can beamform the transmission with respect to the first station based at least on the spatial orientation. The first AP can be configured to exchange, with the second AP, the time and the frequency for coordinating transmissions of the first AP with transmissions of the second AP. The first AP can coordinate transmissions to the first station by the first AP with transmissions to the second station by the second AP using the time and the frequency.

The first AP can be configured to receive a packet comprising information on the first station and identify, from the packet, information indicative of a spatial orientation of the first station with respect to the second AP. The first AP can be configured to determine the first direction of the first station using the spatial orientation.

The first AP can be configured to receive, from the second AP, a third message identifying a third station of the second AP for which interference from the first AP is to be partially nulled and a third direction in which the interference from the first AP is partially nulled at the third station. The first AP can be configured to configure the one or more settings of the first AP to coordinate with the second AP the time and the frequency of the transmission to the first station to be sent according to a fourth direction to partially null the interference at the third station and along the third direction.

The first AP can be configured to form a beam for the transmission to the first station according to the second direction to partially null the interference at the second station and according to the third direction to partially null the interference at the third station. The first AP can be configured to transmit, to the first station, a plurality of streams comprising the transmission. A number of the plurality of streams may be a number that does not exceed a number of antennas of the first station. The first AP can transmits, to a plurality of stations comprising the first station, a second plurality of streams comprising the plurality of streams.

At least one aspect is directed to a method. The method can include generating, by a first access point (AP) for a second AP, a first message identifying a first station of the first AP for which interference from the second AP is to be partially nulled. The method can include receiving, by the first AP from the second AP, a second message identifying a second station of the second AP for which interference from the first AP is to be partially nulled. The method can include determining, responsive at least to the second message, a first direction in which the interference at the first station from the second AP is partially nulled and a second direction in which the interference at the second station from the first AP is partially nulled. The method can include configuring, by the first AP, one or more settings of the first AP to coordinate with the second AP a time and a frequency of a transmission to the first station to be sent according to the second direction to partially null the interference at the second station.

The method can include transmitting, by the first AP to the first station at the time and the frequency, a first spatial stream of data comprising the transmission. The first spatial stream of data can be oriented along a third direction to partially null the interference at the second station and along the second direction. The method can include coordinating, by the first AP, the first stream of data with a second stream of data transmitted by the second AP to the second station at the time and frequency along a fourth direction to partially null the interference at the first station and along the first direction. The first station can be configured to receive wireless transmissions from the first AP via the wireless local area network (WLAN) of the first AP. The second station can be configured to receive wireless transmissions from the second AP via the WLAN of the second AP. The first station and the second station can each be located within a first range of the wireless transmissions from the first AP and a second range of the wireless transmissions from the second AP.

The method can include transmitting, by the first AP, to the first station at the time and the frequency, a first spatial stream of data comprising the transmission. The first spatial stream of data can be oriented along a third direction to partially null the interference at the second station and along the second direction. The method can include transmitting, by the second AP, to the second station at the time and the frequency, a second spatial stream of data comprising a second transmission. The second spatial stream of data oriented along a fourth direction to partially null the interference at the first station and along the first direction. The method can include determining, by the first AP based at least on the second direction, a spatial orientation of the signal transmitted from one or more antennas of the first AP. The method can include the first AP beamforming the transmission with respect to the first station based at least on the spatial orientation. The method can include exchanging, by the first AP with the second AP, the time and the frequency for coordinating transmissions of the first AP with transmissions of the second AP. The method can include coordinating, by the first AP, transmissions to the first station by the first AP with transmissions to the second station by the second AP using the time and the frequency.

The method can include receiving, by the first AP, a packet comprising information on the first station. The method can include identifying, by the first AP, from the packet, information indicative of a spatial orientation of the first station with respect to the second AP. The method can include determining, by the first AP, the first direction of the first station using the spatial orientation.

The method can include receiving, by the first AP from the second AP, a third message identifying a third station of the second AP for which interference from the first AP is to be partially nulled and a third direction in which the interference at the third station from the first AP is partially nulled. The method can include configuring, by the first AP, the one or more settings of the first AP to coordinate with the second AP the time and the frequency of the transmission to the first station to be sent according to a fourth direction to partially null the interference at the third station and along the third direction. The method can include forming, by the first AP, a beam for the transmission to the first station according to the first direction.

The method can include transmitting, by the first AP to the first station, a plurality of streams comprising the transmission. The number of the plurality of streams can include a number that does not exceed a number of antennas of the first station. The first AP can transmit, to a plurality of stations comprising the first station, a second plurality of streams comprising the plurality of streams.

At least one aspect is directed to a non-transitory computer-readable medium storing instructions that, when executed by at least one processor of a first access point (AP), cause the at least one processor to generate for transmissions to a second AP, a first message. The first message can identify a first station of the first AP for which interference from the second AP is to be partially nulled. The instructions, when executed by the at least one processor can cause the at least one processor to receive, from the second AP, a second message identifying a second station of the second AP for which interference from the first AP is to be partially nulled. The instructions, when executed by the at least one processor can cause the at least one processor to determine, responsive at least to the second message, a first direction in which the interference at the first station from the second AP is partially nulled and a second direction in which the interference at the second station from the first AP is partially nulled. The instructions, when executed by the at least one processor can cause the at least one processor to configure one or more settings of the first AP to coordinate with the second AP a time and a frequency of a transmission to the first station to be sent according to the second direction to partially null the interference at the second station.

The instructions, when executed by the at least one processor can cause the at least one processor to transmit, to the first station at the time and the frequency, a first spatial stream of data comprising the transmission. The first spatial stream of data can be oriented along a third direction to partially null the interference at the second station and along the second direction. The first stream of data can be coordinated with a second stream of data transmitted by the second AP to the second station at the time and frequency along a fourth direction to partially null the interference at the first station and along the first direction.

### BRIEF DESCRIPTION OF THE DRAWINGS

Various objects, aspects, features, and advantages of the disclosure will become more apparent and better understood by referring to the detailed description taken in conjunction with the accompanying drawings, in which like reference characters identify corresponding elements throughout. In the drawings, like reference numbers generally indicate identical, functionally similar, and/or structurally similar elements.
FIG. 1A is a block diagram depicting a network environment including one or more access points in communication with one or more devices or stations, according to some embodiments.
FIGs. 1B and 1C are block diagrams depicting computing devices useful in connection with the methods and systems described herein, according to some embodiments.
FIG. 2 illustrates an example system of coordinated partial rank nulling in a multiple AP and multiple STA environment, according to some embodiments.
FIG. 3 is an example plot of a signal-space of a STA transmission in the context of a single AP partial-rank nulling.
FIG. 4 is an example plot of two signal-spaces two STA transmissions in the context of 2 AP coordinated partial-rank nulling.
FIG. 5 is an example flow of a method of implementing coordinated partial rank nulling in a multi-AP environment.

The details of various embodiments of the methods and systems are set forth in the accompanying drawings and the description below.

### DETAILED DESCRIPTION

The following IEEE standard(s), including any draft versions of such standard(s), are hereby incorporated herein by reference in their entirety and are made part of the present disclosure for all purposes: Wi-Fi Alliance standards and IEEE 802.11 standards including but not limited to IEEE 802.11a^{™}, IEEE 802.11b^{™}, IEEE 802.11g^{™}, IEEE P802.11n^{™}; IEEE P802.11ac^{™}; and IEEE P802.11be^{™} draft version D3.0 standards. Although this disclosure can reference aspects of these standard(s), the disclosure is in no way limited by these standard(s).

For purposes of reading the description of the various embodiments below, the following descriptions of the sections of the specification and their respective contents can be helpful:
- Section A describes a network environment and computing environment which can be useful for practicing embodiments described herein; and
- Section B describes coordinated partial-rank nulling in multi-AP transmissions.

### A. Computing and Network Environment

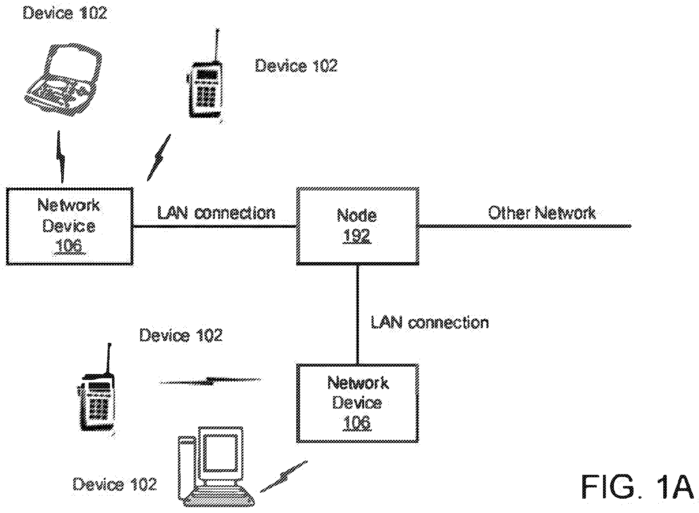

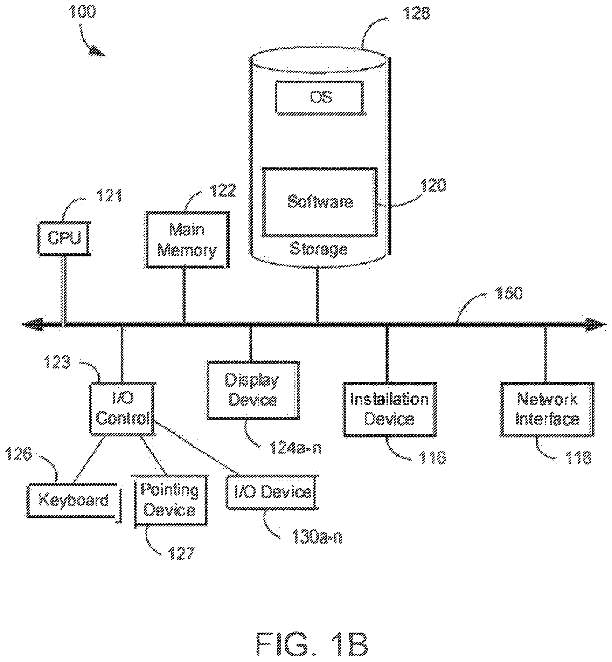

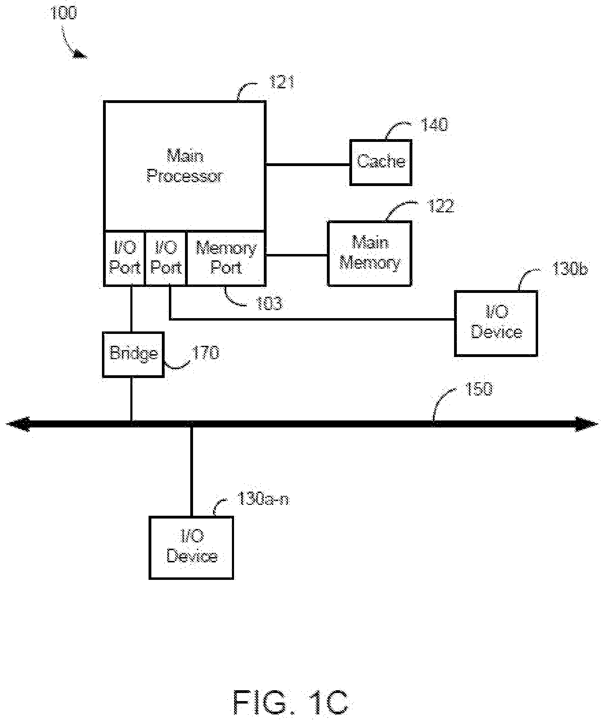

Prior to discussing specific embodiments of the present solution, it can be helpful to describe aspects of the operating environment as well as associated system components (e.g., hardware elements) in connection with the methods and systems described herein. Referring to FIG. 1A, an embodiment of a network environment is depicted. In brief overview, the network environment includes a wireless communication system that includes one or more access points (APs) or network devices 106, one or more stations, also referred to as STAs or wireless communication devices 102 and a network hardware component or network hardware 192. The wireless communication devices or STAs 102 can for example include laptop computers, tablets, personal computers, and/or cellular telephone devices. The details of an embodiment of each station or wireless communication device 102 and AP or network device 106, such as their internal hardware and software configurations, can be described in greater detail with reference to FIGS. 1B and 1C. The network environment can be an ad hoc network environment, an infrastructure wireless network environment, a subnet environment, etc. in one embodiment. The network devices 106 or APs can be operably coupled to the network hardware 192 via local area network connections. Network devices 106 or APs can include, for example, Wi-Fi devices providing WLANs, or 5G base stations for providing cellular networks. The network hardware 192, which can include a router, gateway, switch, bridge, modem, system controller, appliance, etc., can provide a local area network connection for the communication system. Each of the network devices 106 or APs can have an associated antenna or an antenna array to communicate with the wireless communication devices in its area. The wireless communication devices 102 can register with a particular network device 106 or AP to receive services from the communication system (e.g., via a SU-MIMO or MU-MIMO configuration). For direct connections (e.g., point-to-point communications), some wireless communication devices can communicate directly via an allocated channel and communications protocol. Some of the wireless communication devices 102 can be mobile or relatively static with respect to network device 106 or AP.

In some embodiments, a network device 106 or AP includes a device or module (including a combination of hardware and software) that allows wireless communication devices 102 to connect to a wired network using wireless fidelity (WiFi), or other standards. A network device 106 or AP can sometimes be referred to as a wireless access point (WAP). A network device 106 or AP can be implemented (e.g., configured, designed and/or built) for operating in a wireless local area network (WLAN). A network device 106 or AP can connect to a router (e.g., via a wired network) as a standalone device in some embodiments. In other embodiments, network device 106 or AP can be a component of a router. Network device 106 or AP can provide multiple devices access to a network. Network device 106 or AP can, for example, connect to a wired Ethernet connection and provide wireless connections using radio frequency links for other devices 102 to utilize that wired connection. A network device 106 or AP can be implemented to support a standard for sending and receiving data using one or more radio frequencies. Those standards, and the frequencies they use can be defined by the IEEE (e.g., IEEE 802.11 standards). A network device 106 or AP can be configured and/or used to support public Internet hotspots, and/or on a network to extend the network's Wi-Fi signal range.

In some embodiments, the access points or network devices 106 can be used for (e.g., in-home, in-vehicle, or in-building) wireless networks (e.g., IEEE 802.11, Bluetooth, ZigBee, any other type of radio frequency based network protocol and/or variations thereof). Each of the wireless communication devices 102 can include a built-in radio and/or is coupled to a radio. Such wireless communication devices 102 and /or access points or network devices 106 can operate in accordance with the various aspects of the disclosure as presented herein to enhance performance, reduce costs and/or size, and/or enhance broadband applications. Each wireless communication device 102 can have the capacity to function as a client node seeking access to resources (e.g., data, and connection to networked nodes such as servers) via one or more access points or network devices 106.

The network connections can include any type and/or form of network and can include any of the following: a point-to-point network, a broadcast network, a telecommunications network, a data communication network, a computer network. The topology of the network can be a bus, star, or ring network topology. The network can be of any such network topology as known to those ordinarily skilled in the art capable of supporting the operations described herein. In some embodiments, different types of data can be transmitted via different protocols. In other embodiments, the same types of data can be transmitted via different protocols.

The communications device(s) 102 and access point(s) or network devices 106 can be deployed as and/or executed on any type and form of computing device, such as a computer, network device or appliance capable of communicating on any type and form of network and performing the operations described herein. FIGS. 1B and 1C depict block diagrams of a computing device 100 useful for practicing an embodiment of the wireless communication devices 102 or network device 106. As shown in FIGS. 1B and 1C, each computing device 100 includes a processor 121 (e.g., central processing unit), and a main memory unit 122. As shown in FIG. 1B, a computing device 100 can include a storage device 128, an installation device 116, a network interface 118, an I/O controller 123, display devices 124a-124n, a keyboard 126 and a pointing device 127, such as a mouse. The storage device 128 can include an operating system and/or software. As shown in FIG. 1C, each computing device 100 can also include additional optional elements, such as a memory port 103, a bridge 170, one or more input/output devices 130a-130n, and a cache memory 140 in communication with the central processing unit or processor 121.

The central processing unit or processor 121 is any logic circuitry that responds to, and processes instructions fetched from the main memory unit 122. In many embodiments, the central processing unit or processor 121 is provided by a microprocessor unit, such as: those manufactured by Intel Corporation of Santa Clara, California; those manufactured by International Business Machines of White Plains, New York; or those manufactured by Advanced Micro Devices of Sunnyvale, California. The computing device 100 can be based on any of these processors, or any other processor capable of operating as described herein.

Main memory unit 122 can be one or more memory chips capable of storing data and allowing any storage location to be directly accessed by the microprocessor or processor 121, such as any type or variant of Static random access memory (SRAM), Dynamic random access memory (DRAM), Ferroelectric RAM (FRAM), NAND Flash, NOR Flash and Solid State Drives (SSD). The main memory unit 122 can be based on any of the above described memory chips, or any other available memory chips capable of operating as described herein. In the embodiment shown in FIG. 1B, the processor 121 communicates with main memory unit 122 via a system bus 150 (described in more detail below). FIG. 1C depicts an embodiment of a computing device 100 in which the processor communicates directly with main memory unit 122 via a memory port 103. For example, in FIG. 1C the main memory unit 122 can be DRDRAM.

FIG. 1C depicts an embodiment in which the main processor 121 communicates directly with cache memory 140 via a secondary bus, sometimes referred to as a backside bus. In other embodiments, the main processor 121 communicates with cache memory 140 using the system bus 150. Cache memory 140 typically has a faster response time than main memory unit 122 and is provided by, for example, SRAM, BSRAM, or EDRAM. In the embodiment shown in FIG. 1C, the processor 121 communicates with various I/O devices 130 via a local system bus 150. Various buses can be used to connect the central processing unit or processor 121 to any of the I/O devices 130, for example, a VESA VL bus, an ISA bus, an EISA bus, a MicroChannel Architecture (MCA) bus, a PCI bus, a PCI-X bus, a PCI-Express bus, or a NuBus. For embodiments in which the I/O device is a video display 124, the processor 121 can use an Advanced Graphics Port (AGP) to communicate with the display 124. FIG. 1C depicts an embodiment of a computer or computer system 100 in which the main processor 121 can communicate directly with I/O device 130b, for example via HYPERTRANSPORT, RAPIDIO, or INFINIBAND communications technology. FIG. 1C also depicts an embodiment in which local busses and direct communication are mixed: the processor 121 communicates with I/O device 130a using a local interconnect bus while communicating with I/O device 130b directly.

A wide variety of I/O devices 130a-130n can be present in the computing device 100. Input devices include keyboards, mice, trackpads, trackballs, microphones, dials, touch pads, touch screen, and drawing tablets. Output devices include video displays, speakers, inkjet printers, laser printers, projectors and dye-sublimation printers. The I/O devices can be controlled by an I/O controller 123 as shown in FIG. 1B. The I/O controller can control one or more I/O devices such as a keyboard 126 and a pointing device 127, e.g., a mouse or optical pen. Furthermore, an I/O device can also provide storage and/or an installation medium for the computing device 100. In still other embodiments, the computing device 100 can provide USB connections (not shown) to receive handheld USB storage devices such as the USB Flash Drive line of devices manufactured by Twintech Industry, Inc. of Los Alamitos, California.

Referring again to FIG. 1B, the computing device 100 can support any suitable installation device 116, such as a disk drive, a CD-ROM drive, a CD-R/RW drive, a DVD-ROM drive, a flash memory drive, tape drives of various formats, USB device, hard-drive, a network interface, or any other device suitable for installing software and programs. The computing device 100 can further include a storage device, such as one or more hard disk drives or redundant arrays of independent disks, for storing an operating system and other related software, and for storing application software programs such as any program or software 120 for implementing (e.g., configured and/or designed for) the systems and methods described herein. Optionally, any of the installation devices 116 could also be used as the storage device. Additionally, the operating system and the software can be run from a bootable medium.

Furthermore, the computing device 100 can include a network interface 118 to interface to a network through a variety of connections including, but not limited to, standard telephone lines, LAN or WAN links (e.g., 802.11, T1, T3, 56kb, X.25, SNA, DECNET), broadband connections (e.g., ISDN, Frame Relay, ATM, Gigabit Ethernet, Ethernet-over-SONET), wireless connections, or some combination of any or all of the above. Connections can be established using a variety of communication protocols (e.g., TCP/IP, IPX, SPX, NetBIOS, Ethernet, ARCNET, SONET, SDH, Fiber Distributed Data Interface (FDDI), RS232, IEEE 802.11, IEEE 802.11a, IEEE 802.11b, IEEE 802.11g, IEEE 802.11n, IEEE 802.11ac, IEEE 802.11ad, CDMA, GSM, WiMax and direct asynchronous connections). In one embodiment, the computing device 100 communicates with other computing devices 100' via any type and/or form of gateway or tunneling protocol such as Secure Socket Layer (SSL) or Transport Layer Security (TLS). The network interface 118 can include a built-in network adapter, network interface card, PCMCIA network card, card bus network adapter, wireless network adapter, USB network adapter, modem or any other device suitable for interfacing the computing device 100 to any type of network capable of communication and performing the operations described herein.

In some embodiments, the computing device 100 can include or be connected to one or more display devices 124a-124n. As such, any of the I/O devices 130a-130n and/or the I/O controller 123 can include any type and/or form of suitable hardware, software, or combination of hardware and software to support, enable or provide for the connection and use of the display device(s) 124a-124n by the computing device 100. For example, the computing device 100 can include any type and/or form of video adapter, video card, driver, and/or library to interface, communicate, connect or otherwise use the display device(s) 124a-124n. In one embodiment, a video adapter can include multiple connectors to interface to the display device(s) 124a-124n. In other embodiments, the computing device 100 can include multiple video adapters, with each video adapter connected to the display device(s) 124a-124n. In some embodiments, any portion of the operating system of the computing device 100 can be configured for using multiple display devices 124a-124n. In further embodiments, an I/O device 130 can be a bridge between the system bus 150 and an external communication bus, such as a USB bus, an Apple Desktop Bus, an RS-232 serial connection, a SCSI bus, a FireWire bus, a FireWire 800 bus, an Ethernet bus, an AppleTalk bus, a Gigabit Ethernet bus, an Asynchronous Transfer Mode bus, a FibreChannel bus, a fiber optic bus, a Serial Attached small computer system interface bus, a USB connection, or a HDMI bus.

A computing device 100 of the sort depicted in FIGS. 1B and 1C can operate under the control of an operating system, which controls scheduling of tasks and access to system resources. The computing device 100 can be running any operating system such as any of the versions of the MICROSOFT WINDOWS operating systems, the different releases of the Unix and Linux operating systems, any version of the MAC OS for Macintosh computers, any embedded operating system, any real-time operating system, any open source operating system, any proprietary operating system, any operating systems for mobile computing devices, or any other operating system capable of running on the computing device and performing the operations described herein. Typical operating systems include, but are not limited to: Android, produced by Google Inc.; WINDOWS 7, 8 and 10, produced by Microsoft Corporation of Redmond, Washington; MAC OS, produced by Apple Computer of Cupertino, California; WebOS, produced by Research In Motion (RIM); OS/2, produced by International Business Machines of Armonk, New York; and Linux, a freely-available operating system distributed by Caldera Corp. of Salt Lake City, Utah, or any type and/or form of a Unix operating system, among others.

The computer system or computing device 100 can be any workstation, telephone, desktop computer, laptop or notebook computer, server, handheld computer, mobile telephone or other portable telecommunications device, media playing device, a gaming system, mobile computing device, or any other type and/or form of computing, telecommunications or media device that is capable of communication. In some embodiments, the computing device 100 can have different processors, operating systems, and input devices consistent with the device. For example, in one embodiment, the computing device 100 is a smart phone, mobile device, tablet or personal digital assistant. Moreover, the computing device 100 can be any workstation, desktop computer, laptop or notebook computer, server, handheld computer, mobile telephone, any other computer, or other form of computing or telecommunications device that is capable of communication and that has sufficient processor power and memory capacity to perform the operations described herein.

Aspects of the operating environments and components described above will become apparent in the context of the systems and methods disclosed herein.

### B. Coordinated partial-rank nulling in multi AP Transmissions

When an APs transmits data to a particular intended recipient STA within its own basic service set (BSS), other STAs within the same, or a neighboring BSSs (e.g., other WLANs) can be within the range of the transmitting AP and experience interference. Interference can include any undesired disruption or degradation of a signal, communication, or system caused by the presence of an external signal, noise, or other factors that interfere with the intended transmission or reception of information. For instance, when transmissions destined for different STAs simultaneously occur on the same channels, interferences caused by the transmissions can be difficult to resolve as the information from one or more of the transmissions may be unknown and a relationship between the transmissions may be unknown. Such interferences can cause latencies, delays or dropped network packets, making data transmissions within such networks more difficult, adversely affecting user experience.

The technical solutions of the present disclosure overcome these challenges by providing or facilitating a multi-AP coordinated beamforming with nulling (CBF) in which APs from different BSSs (e.g., WLANs) can configure their transmissions to be sent along spatial directions or vectors at which interferences from those APs are minimized at unintended recipient STAs or clients. The technical solutions can include client devices (STAs), receiving spatial streams from the APs of their respective networks. A network, such as a WLAN of a particular AP, can include one or more basic service sets (BSS) having an AP and one or more STAs configured for wireless communication via the same AP, such as by being configured to the local WLAN of the AP. As APs may transmit any number of data streams to any number of STAs within their BSS, STAs for which the data stream is not intended may be within the wireless communication range of the transmitting AP and experience interference. The technical solutions of the present disclosure can utilize spatial orientations of the unintended STA recipients and beamforming functionalities of the APs to transmit data streams to their intended STAs along the spatial orientations at which these transmissions are partially nulled at the unintended recipient locations. In doing so, the technical solutions of the present solution allow multiple APs to communicate at the same time and frequency (e.g., simultaneous transmissions on the same channel), while avoiding interferences, thereby increasing throughput of the transmissions, decreasing latency and minimizing the spectrum use to avoid interference.

Technical solutions of the present disclosure can include systems and methods of multi-AP coordinated-beamforming (CBF) with nulling to facilitate coordinated partial-rank nulling in multi-AP transmissions. CBF with nulling can include one of the candidate features being considered for the next-generation Wi-Fi standard (UHR, 11bn). Nulling can include any reduction or cancellation on unwanted signals or interference at a receiver, such as by adjusting the phase and amplitude of incoming signals. Nulling can include a technique in which an AP minimizes interference experienced by a STA by selectively reducing the strength or power of unwanted signals from other sources. Nulling can include a technique in which a system can combine a signal with another signal in order to create a null (e.g., cancel out the original signal. Nulling can be utilized or included to minimize an AP interference seen by a STA due to the AP's transmissions to other STAs (either in the same or different BSS as the first STA).

Partial-rank nulling, sometimes also referred to as partial nulling, can include an AP minimizing (e.g., reducing below an acceptable threshold) interference in a smaller number of dimensions or directions than what a STA can receive. For instance, partial-rank nulling can include a technique for minimizing or reducing an unwanted signal or an interference (e.g., to below an acceptable threshold level) without completely eliminating the interference. For example, if a STA has two receive-antennas (i.e., can receive signals in two dimensions or directions), partial-rank nulling can minimize interference along only one dimension or direction as seen by the STA. The present solution can provide a mechanism of coordinated partial-rank nulling that minimizes the interference at a STA, with both its self-BSS as well as other-BSS (OBSS) in which APs transmit communications concurrently. The technical solutions can also include AP-coordination mechanisms to achieve the above partial-rank nulling.

Partial-rank nulling with self-BSS and other-BSS access points can be implemented in wireless communication systems. For example, in a multiuser multiple-input multiple-output (MU-MIMO) system, partial-rank nulling can be used to improve the overall system performance by mitigating interference between multiple communication devices. For example, multiple devices can simultaneously transmit and receive data via their antennas. Due to the spatial proximity between the devices, interferences can occur between different devices. Interferences can degrade the performance of the system, leading to lower data rates and reduced overall capacity. Partial-rank nulling with self BSS and other-BSS access points can address this issue by selectively nulling interferences at unintended recipient STAs.

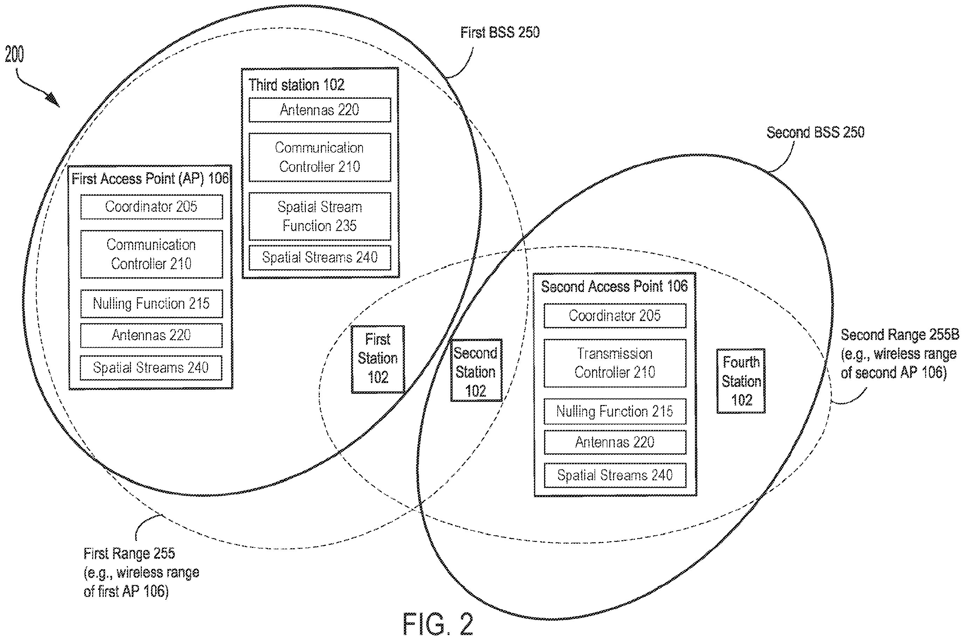

Referring now to FIG. 2, an example of a system 200 for implementing a coordinated partial-rank nulling with multi-AP transmissions is illustrated. System 200 can include one or more access points (APs) 106 (e.g., Wi-Fi routers) providing transmissions to stations or STAs 102 within their BSSs 250. APs 106 can also have wireless transmission ranges 255 that can include STAs 102 outside of their BSS (e.g., STAs not configured to the WLANs of the respective APs, but still capable of receiving transmissions or interferences from those APs).

FIG. 2 can include a first AP 106 having a first BSS 250 including first station 102 and a second station 102, as well as a second AP 106 having a second BSS 250 including a second station 102 and a fourth station 102. Each of the first and second APs 106 can include one or more coordinators 205, communication controllers 210, nulling functions 215, antennas 220 and spatial streams 240. Each of the STAs 102 (e.g., first, second, third and fourth stations 102 in system 200) can include one or more antennas 220, communication controllers 210, spatial stream functions 235 and spatial streams 240. In addition to the STAs 102 within their own BSSs 250, each of the APs 106 can also have a wireless signal range 255 which can cover or include the STAs 102 of their own BSS 250, but also STAs 102 that are outside of their BSS 250. For example, in addition to the first and third STAs 102, the first range 255 of the first AP 106 can include the second STA 102 (e.g., from the BSS of the second AP 106). Similarly, in addition to the second and fourth STAs 102, the second AP 106 can have a second signal range 255 that can include the first STA 102 (e.g., from the BSS of the first AP 106)

FIG. 2 can illustrate an environment in which APs 106 can coordinate their transmissions according to their prior-negotiated and configured partial-rank nulling. For instance, system 200 can be used to provide single-AP partial-rank nulling (e.g., partially nulling interferences to non-recipient STAs within the BSS of the transmitting AP) and multi-AP partial-rank nulling (e.g., partially nulling interferences to non-recipient STAs within the same or a different BSS with respect to the transmitting AP).

AP 106 can include any combination of hardware and software that allows wireless communication devices, such as STAs 102, to connect wirelessly to a wired network or world wide web or internet. AP 106 can include any combination of hardware and software for facilitating wireless communication within a WLAN of the AP for any STAs 102 that are included in its BSS 250. APs 106 can include one or more communication devices, such as Wi-Fi routers, switches, Bluetooth hubs, cellular network base stations and can utilize any wireless communication protocols or standards, such as 802.1 1bn for wireless communication.

APs 106 and STAs 102 can be configured for wireless communication in wireless communication networks, such as a LAN, WAN or a cellular network. For example, each AP 106 can include, be associated with, be coupled with, provide or facilitate a communication network, such as WLAN of a Wi-Fi for any clients or stations 102 of its own basic service set (BSS).

BSS 250 can include any one or more APs and client devices (e.g., STAs 102) coupled to the AP within a particular coverage area, such as a range 255. BSS 250 can provide an infrastructure for the AP 106 to provide network communication to STAs 102 within its frequency coverage area. Within a BSS 250, an AP 106 can manage data distribution to various connected devices (e.g., STAs 102), facilitate implementation of security protocols or functions and roaming as STAs 102 may move in and out of its coverage area (e.g., range 255). Range 255 can include an area to which signals from the AP 106 can reach to recipient STAs 102. Range 255 can include STAs 102 that are within the BSS 250 of the given AP 106 or STAs 102 that are a part of BSS 250 of another AP 106, such as for example, first STA 102 which is a part of the first BSS 250 of the first AP 106, but also within a second range 255 of the second AP 106 servicing second and fourth STAs 102 of the second BSS 250.

Coordinator 205 can include any combination of hardware and software for coordinating communications between APs 106 and/or STAs 102. Coordinator 205 can include functionality (e.g., applications, computer code or programs) facilitating coordination of communication (e.g., transmissions) between APs 106 and STAs 102 or among APs 106. Coordinator 205 can include functionality for implementing a coordination phase to identify STAs 102 for which interference needs to be wholly or partially nulled and exchanging STA 102 information between APs 106. Coordinator 205 can include functionality for coordinating timing and frequencies, such as exchanging timing and frequencies information (e.g., communication bands or channels) between APs 106. Coordinator 205 can generate, facilitate, implement and apply settings or configurations to APs 106 and/or STAs 102 to facilitate coordinated partial-rank nulling.

Coordinator 205 can include a precoder functionality, such as a precoder algorithm for computing beamforming vectors for each STA 102 to achieve partial-rank nulling. Precoder can include a functionality for computing directions or vectors for beamforming transmissions to STAs 102. Precoder can include a functionality for utilizing information or data on directions or vectors at the STAs 102 at which interference is minimized or reduced below a threshold for acceptable level of interference (e.g., partial-rank nulling is achieved) to determine directions or vectors for beamforming transmissions to perform partial-rank nulling at such STAs 102.

Coordinator 205 can include the functionality to perform channel-sounding to STAs 102. For example, coordinator 205 can facilitate, instruct or request each STA to measure one or more MIMO channels for each sounding AP and provide measurements back to the coordinator 205. The relative phase-offsets across receive antennas 220 for the STA 102 can be maintained at constant values when measuring channels for different APs 106. Coordinator 205 can exchange with the STAs 102 estimates of the MIMO channel for a sounding AP (e.g., via a compressed beamforming report format (CBR), as provided in 802.11, or in Cartesian form). Coordinator 205 can exchange information for interfering APs 106 (e.g., APs 106 from external BSSs 250), such as when STAs 102 provide linear transformation of the MIMO channel from that particular interfering AP 106. The linear transformation can be determined using previously measured MIMO channel between the STA and its own AP 106 (e.g., AP 106 of STA's BSS 250). For example, linear transformation of the MIMO channel could represent projection onto one or more eigen-models of the MIMO channel measured between the STA and the AP 106 of STA's own BSS. For example, coordinator 205 can exchange (e.g., receive) set of directions in which an AP 106 is to minimize interference if the STA is receiving a particular number of intended spatial streams from its own AP 106 (e.g., AP 106 from STA's own BSS 250).

Coordinator 205 can include the functionality for facilitating or performing channel-sounding to STAs 102. Channel sounding can include transmitting signals and receiving, in response, characteristics, such as signal strength, delay and phase, and then using such received characteristics determine the quality of the communication channels. Coordinator 205 can transmit (e.g., individually or jointly with APs 106 of other BSSs 250) one or more null-data-packets (NDPs). NDPs can be synchronized in time and/or frequency (e.g., between multiple APs 106 performing simultaneous channel sounding). The number of sounding dimensions in the NDP can include a total number of antennas across the APs. Jointly transmitted NDPs can be preceded by one or more NDP announcement (NDPA) frames. For example, an AP 106 can transmit an NDPA on behalf of all APs 106 performing channel sounding to all the STAs 102 being sounded. For example, each of the APs 106 sends an NDPA sequentially to their own STAs 102. For example, all APs 106 transmit their NDPAs at the same time but separated in frequency (e.g., via OFDMA) with each AP 106 addressing the STAs 102 within its own BSS 250. For example, coordinator 205 can provide or facilitate trigger frames transmitted by the AP 106, based on which all the APs 106 participating in channel sounding can synchronize their carrier frequency offsets (CFOs) and the start time of their coordinated transmissions.

Communication controllers 210 can include any combination of hardware and software for implementing wireless communications between APs 106 and STAs 102. Communication controller 210 can include the functionality for providing and transmitting data (e.g., spatial streams) to the intended STAs 102. Communication controller 210 can transmit messages to STAs 102, such as inquiring about information, data or description of directions or vectors in which interferences are to be minimized at each STA 102. Communication controller 102 can include the functionality for configuring for transmission features of the AP 106 to perform and implement the transmissions of the spatial streams 240 in accordance with partial-rank nulling. For instance, communication controller 210 can configure antennas 220 and any other settings to facilitate or implement transmissions of spatial streams 240 according to the specific directions or vectors (e.g., as determined by the coordinator 205), to implement partial-rank nulling at the specific STAs 102. Communication controller 210 can control, manage and implement the transmissions (e.g., communications) in accordance with the timing and frequency (e.g., selected channels or bands), as well as in directions or vectors in which partial-rank nulling is implemented.

APs 106 and/or STAs 102 can include communication controllers 210 to facilitate wireless communications with each other. Communication controllers 210 can include and/or utilize wireless communication interfaces, such as hardware and software, including transceivers, antennas, RF interfaces, ports and processing devices facilitating communications via standards, such as 802.11a/b/g/n/ac/ax, Bluetooth, Cellular (e.g., 3G, 4G, 5G), Zigbee, Z-Wave, NFC and others. Communication controllers 210 can control receiving and transmission of signals, data, or messages to facilitate or implement the multi-AP transmissions using coordinated partial-rank nulling.

APS 106 can include nulling functions 215 for implementing nulling or partial-rank nulling per coordinated (e.g., agreed upon) communications between the APs 106. Partial-rank nulling can include any technique or action in array signal processing for suppressing interference from signals from specific directions while preserving signals arriving from other directions. For example, partial-rank nulling can include manipulating the array response to create nulls or zeros in the radiation pattern in interference from a particular direction. Nulling function 215 can include any combination of hardware and software for reducing or cancelling unwanted signals or interference at a receiver (e.g., STA 102), such as by adjusting the phase and amplitude of incoming signals. Nulling function 215 can include any combination of hardware and software for minimizing or reducing an unwanted signal or an interference (e.g., to below an acceptable threshold level), such as without completely eliminating the interference.

Nulling function 215 can include the functionality to measure interference from a particular AP 106 from various receive vectors or directions with respect to the STA 102. Direction can include any path or course along which the transmission signal is moving, oriented, or pointing (e.g., as a vector), and can be specified by its position relative to a reference point or object, such as an AP and/or STA. Nulling function 215 can identify or use measured signals (e.g., sounding signals) from multiple angles, directions or vectors and identify the angle, direction or vector from, along or at which the interference is the lowest or below an acceptable threshold. Nulling function 215 can include or utilize a precoder, such as residing within coordinator 205, to determine the direction or angle along which the interference is lowest or reduced below a threshold (e.g., partial rank nulling). Nulling function 215 can then select the direction, angle or vector corresponding to the lowest interference as the direction at which the signal from that AP 106 is to be partially nulled.

APS 106 and stations 102 can include antennas 220. Antennas 220 can include any transmission or receive antennas. Antennas 220 can include, or be coupled with, communication chains and/or transceivers implementing the communication, including chains of circuitry (e.g., amplifiers, filters, analog to digital and/or digital to analog converters, processors, signal combiners and other circuitry to facilitate signal transmission or receipt.

APs 106 and stations 102 can communication spatial streams 240 (e.g., spatial streams M of an AP 106 intended for a particular STA 102, or a total number of spatial streams N transmitted by an AP 106). Spatial stream 240 can include any data stream transmitted or received through a separate antenna in a MIMO wireless communication system. For instance, a spatial stream can be transmitted or received on more than one antenna, and multiple spatial streams may share the same set of antennas. For example, each spatial stream when transmitted over multiple antennas can use a unique beamforming vector, which can be different from the vectors used for other spatial streams transmitted over the same set of antennas. Spatial streams 240 can provide or facilitate improved throughput and reliability by using multiple antennas to create distinct data paths. Spatial streams 240 can be suitable for directional control and transmissions with partial-rank nulling.

System 200 can include or use any number of spatial streams 240, including any independent data streams transmitted simultaneously over multiple antennas in a MIMO (Multiple-Input Multiple-Output) system. System 200 can include STAs 102 that can be configured for communicating a wireless network (e.g., WLAN of a BSS 250) to receive and transmit data. System 200 can allow a STA 102 to receive multiple spatial streams 240 simultaneously via one or more receive antennas 220 (e.g., two receive antennas for each STA 102). Each spatial stream 240 can represent an independent data stream transmitted from an AP 106 that can minimize the interference in a number of dimensions/directions. The number of dimensions or directions in which the partial-rank nulling can reduce the interference can be smaller than the number of spatial streams 240 that a STA 102 can receive. For example, if a STA has two receive antennas 220 (e.g., can receive signals in two dimensions or directions), partial-rank nulling can minimize interference along one dimension or direction as seen by the STA 102.

The number of spatial streams 240 that a STA 102 can support can vary based on the capabilities and the MIMO configuration of the network. For example, if a STA 102 has multiple receive antennas 220 and the network is configured for 2x2 MIMO, then STA 102 can receive two spatial streams 240 simultaneously. Each spatial stream 240 can carry independent data, effectively increasing the data capacity and improving the overall throughput, data rates, increased system capacity, and/or wireless network reliability.

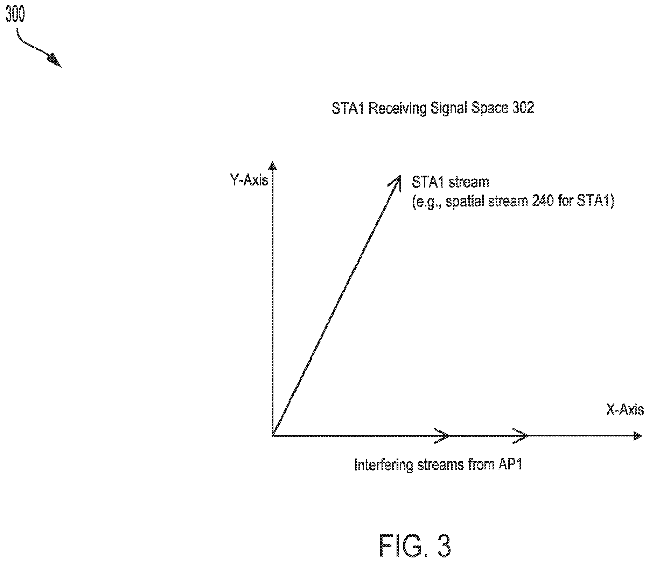

Referring now to FIG. 3, an example of a plot 300 of a signal-space 302 for received transmissions by a STA 102 in an aspect of the technical solution. As shown in plot 300, station 102 (e.g., STA1) having a total of K=2 receive antennas 220 can receive a total number of N=3 spatial data streams 240 transmitted by an AP 106 (AP1). STA1 can be within the BSS 250 of the transmitting AP1 106 and can receive all of 3 spatial data streams 240 transmitted by AP1, even though only one of those spatial data streams 240 are intended for STA1.

For example, AP1 can transmit N=3 spatial streams 240 via a down link (DL) MU-MIMO to multiple STAs 102 within its BSS 250. Of the N=3 total spatial data streams 240 transmitted by AP1, M=1 streams (e.g., a single spatial data stream 240, where M<N) can be intended for STA1. While plot 300 shows STA1 stream (e.g., the stream intended for STA1) directed at an angle away from the X axis, the remaining two spatial data streams 240 (e.g., interfering streams from AP1) are directed along the X-axis. The Y-axis (which is orthogonal or perpendicular to the X-axis) can represent the direction or vector on the signal space 302 of the STA1 along which transmissions are nulled or partially nulled. Accordingly, STA1 stream (being directed at least partially along the Y-axis) can have an interference below a threshold in at least one direction and can therefore be received by the STA1. For example, STA1 stream can be free from interference at least in one direction.

In the example of FIG. 3, receiving station 102, such as the STA1, can have any number of K receive-antennas 220, such that M < K < N, where M corresponds to a total number of data streams intended for the receiving station 102 and N corresponds to a total number of data streams transmitted by the AP 106 to any number of recipients. In plot 300 example, N = 3, M = 1 and K = 2. In such a scenario, for STA1 102 to be able to decode its own M intended spatial-streams 240, AP1 106 can beamform the transmitted spatial-streams such that the signal strength from the interfering streams (e.g., N-M=2 streams aligned with the X-axis) have their signals at the STA1 minimized over a set of M linearly-independent directions as received at STA1 102. M intended streams 240 can be recovered by STA1 102 by projecting them away from the X-axis, as shown by STA1 stream.

AP1 106 can include appropriately constructed long-training fields (LTFs) in its transmissions so that STA1 102 can estimate both i) the directions of its M intended streams, as well as (ii) the M distinct directions in which the interference is minimized. The technical solution can include or provide a framework for a scenario in which any number of APs 106 performing partial-rank nulling towards any number of STAs 102. For instance, when two APs 106 are utilized, prior to implementing coordinated-transmissions, a first AP 106 (e.g., AP1) and a second AP 106 (e.g., AP2) can execute a coordination (e.g., during a coordination phase) in which messages can be exchanged between AP1 and AP2 to identify each receiving STA for which the interference is to be fully or partially nulled. For example, the APs 106 can identify a STA 102 with more receive antennas than its intended spatial streams (e.g., antennas K=2, while received streams N = 10, of which only M=1 is intended for the STA).

Such identified STA can include an interference seen from the OBSS AP to be significant enough to include nulling (e.g., STA can have interference signal strength or power that is above a particular threshold). For example, the threshold can include a level of the background signal noise, or a factor of 2, 3, 4, 5, 10 or more of the level of the background noise. The threshold can be, for example, defined in reference to other signals, such as signal strengths, amplitude or power of received intended streams (e.g., 1/2, 1/3, 1/4, or 1/8 of the intended received spatial stream's signal strength, amplitude or power).

For each STA that is identified to have its interfering streams be partially nulled, the AP1 and AP2 can identify a set of linearly independent receive-directions in which the interference from both APs is to be minimized. Linearly independent receive directions can include distinct and non-correlated paths, directions or channels through which signals can be received by multiple receive antennas 220. AP1 and AP2 can change such a set of directions dynamically from one coordinated transmission to the next depending on: i) other receiving STAs, as well as ii) the number of spatial streams intended for each STA.

Once the set of directions are identified, the AP1 and AP2 can commence coordinated transmission that is synchronized in both time and frequency. For instance, out of a total number N1 spatial streams transmitted from AP1, a subset of M1 spatial streams can be intended for STA1 having a K1 number of receive-antennas. The configuration can include M1 spatial streams intended for STA1 that is less than the number of K1 receive-antennas and which are also less than the total number of N1 spatial streams from the AP1 (e.g., M1 < K1 < N1). Likewise, of the N2 streams transmitted from AP2, M2 streams can be intended to STA2 having K2 receive-antennas can be such that M2 < K2 < N2. In such a configuration, both STA1 and STA2 can be selected, determined or configured to have partial-rank nulling implemented upon them by the AP1 or AP2. AP1 or AP2 can coordinate their data stream transitions in time and frequency, using beamforming to directions at which partial-rank nulling is to be performed to reduce interference and allow simultaneous transmissions.

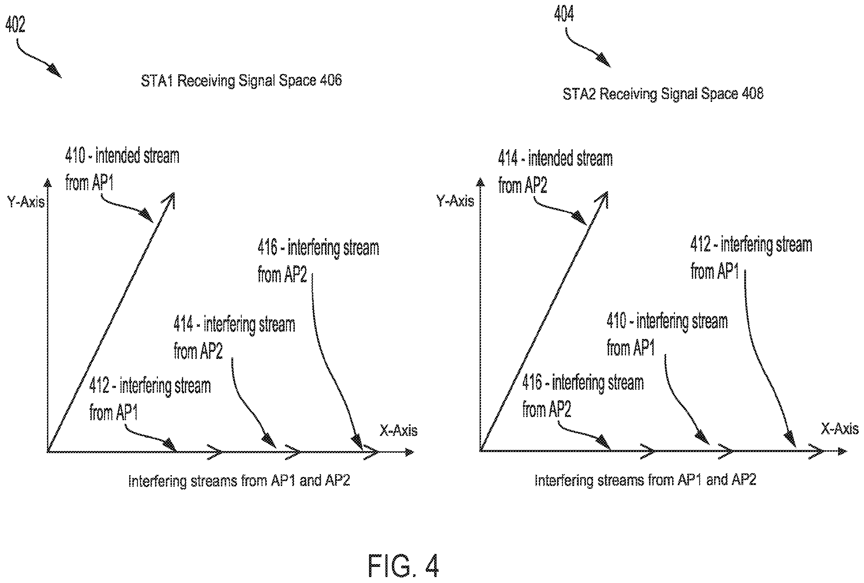

Referring now to FIG. 4, example plots 402 and 404 are illustrated of receiving signal spaces 406 of STA1 and 408 of STA2 which are recipients of transmissions by AP1 and AP2 implementing coordinated partial-rank nulling in a multi-AP transmission example. FIG. 4 can correspond to an instance in which the present technical solutions utilize two APs 106, such as those illustrated in FIG. 2. APs 106 can apply appropriate beamforming vectors to their respective spatial streams 240 to transmit streams at least along the specified directions or vectors as received by the intended STAs, such that the same streams will be partially or fully nulled along the specified directions at the unintended receiving STAs. For example, the beamforming vectors applied to spatial streams can be such that the interference from both AP1 and AP2 is minimized over a set of M1 independent receive-directions at STA1 as pre-agreed during the coordination phase. The M1 intended streams for STA1 can be recovered by projecting the streams in such determined M1 directions. For example, the same can be applied for STA2, with a corresponding set of M2 directions for the STA2. The AP1 and AP2 can include appropriately constructed long-training fields (LTFs) in the coordinated-transmission so that STA1, STA2 can estimate both i) the directions of their respective intended streams, as well as (ii) the directions in which the interference from AP1 and AP2 is minimized.

AP1 and AP2 can each transmit a total number of N = 2 spatial streams 240 of which only M = 1 spatial stream 240 is intended for receipt by the STA 102 of the respective transmitting AP 106's own BSS 250, where each receiving STA 102 includes K =2 receiving antennas 220. For example, for STA1, the remaining one spatial stream from AP1 and both spatial streams from AP2 can produce interference to be partially nulled. As illustrated, a total of 3 spatial streams are partially nulled (e.g., aligned with X-axis or X direction in FIG. 4).

As shown in plot 402, interfering streams 412 from AP1 and 414 and 416 from AP2 are directed along the X direction of STA1 receiving signal space 406, and are eliminated or minimized along the Y direction, while intended stream 410 of AP1 is directed along a different direction (e.g., closer to, or more closely aligned with, the Y direction) and therefore is not eliminated or minimized along the Y-axis or Y direction and received by STA1. For example, Y-axis, also referred to Y direction, can be orthogonal or perpendicular to the X-axis, also referred to as X direction. For example, STA1 receiving signal space allows for intended spatial streams to be received at STA1 when such streams have a component in Y direction that is greater than a threshold. For example, the threshold can up to 5% of the total received signal strength of the intended spatial stream. For example, the threshold can be up to 5%, 10%, 15%, 20%, 30% or greater than 30%, depending on the design.

Similarly, as shown in plot 404, interfering streams 410 and 412 from AP1 and 416 from AP2 are directed along the X direction of STA2 receiving signal space 408, and their signals are also minimized or eliminated along the Y direction, while intended stream 414 from AP2 is directed along a different direction (e.g., closer to, or more closely aligned with, the Y-axis) and therefore is not eliminated or minimized along the Y direction, and received by the STA2. In some implementations, AP1 and AP2 can transmit streams 410, 412, 414 and 416 simultaneously in the presence and range of STA1 and STA2 and interferences and non-interferences of the streams can occur at the same time. Accordingly, the AP1 and AP2 can simultaneously and in a coordinated fashion (e.g., at the same time and frequency) transmit spatial streams to their own respective STAs 102, using partial-rank nulling to prevent interferences to non-intended STAs 102.

In one example, as a part of the coordination phase, the APs 106 (e.g., AP1 and AP2) can exchange information on the precoder-algorithm to be used in computing the beamforming vectors for each STA 102 (e.g., STA1 and STA2) to achieve partial-rank nulling. For example, as a part of the coordination phase, the APs 106 can exchange information, data or description of the direction-vectors in which interference is to be minimized at each STA's receiving antennas 220. For example, as a part of the coordination phase, a single AP 106 can compute the beamforming vectors for all the spatial streams and shares these with the other participating APs.

Using the information exchanged in the coordination phase, the receive-directions in which to minimize interference for each STA 102 can be determined or generated based on, or using, policies, such as policies specified in the standard. The choice of the policy can be fixed as a "default" implementation or can be decided based on the capabilities of the APs 106 and/or the STAs 102. For example, a policy can include for a STA receiving M intended spatial-streams from the AP 106 of its own BSS 250, an interfering AP 106 minimizing interference along the M directions at that STA's receiver corresponding to the M strongest eigen-modes of the channel between the STA 102 and its AP 106 (e.g., AP 106 of STA's own BSS 250). For example, a policy can include, for a STA receiving M intended spatial-streams from the AP of STA's own BSS, an interfering AP 106 minimizing interference along the M directions at that STA's receiver that correspond to the M strongest eigen-modes of the channel between the STA 102 and the interfering AP 106.

For example, as a part of the coordination phase, AP1 and AP2 can each perform channel-sounding to STA1 and STA2. Each STA 102 can measure the MIMO channel from each sounding AP 106 and can provide a response including the measurements. The relative phase-offsets across receive antennas for a STA 102 can be maintained at constant values when measuring channels from different APs.

During the coordination phase, different independent variants and their combinations can be implemented. For example, a STA 102 can feed back estimates of the MIMO channel from a sounding AP in a compressed-beamforming report format (CBR), such as the one defined in 802.11. For example, a STA 102 can feed back estimates of the MIMO channel from a sounding AP in Cartesian-form. For example, for an AP 106 from another BSS 250 than the BSS 250 of the STA, (e.g., an interfering AP), STA 102 can feed back a linear transformation of the MIMO channel from that AP 106. The linear transformation can be determined by the previously measured MIMO channel between the STA and its self-BSS AP. For example, linear-transformations could represent projection onto one or more eigen-modes of the MIMO channel measured between the STA 102 and its self-BSS AP 106. For example, for a sounding AP 106, a STA 102 can feed back the preferred set of M directions in which the corresponding AP can minimize interference if the STA 102 is receiving M intended spatial streams from its self-BSS AP 106.

As part of the coordination phase, the APs 106 (e.g., AP1 and AP2) can jointly perform channel-sounding to STAs 102. APs 106 can jointly transmit a null-data-packet (NDP) which can be synchronized in time/frequency. The total number of sounding dimensions in the NDP can equal to the total number of antennas 220 across the APs 106. The jointly transmitted NDP can be preceded by one or more NDP announcement (NDPA) frames. For example, a single AP 106 can transmit an NDPA on behalf of all the APs, to STAs across BSS 250 that are to be sounded. For example, all the APs 106 cam transmit their NDPAs sequentially, with each AP's NDPA addressing the STAs 102 within their own BSS 250. For example, all APs 106 can transmit their NDPAs at the same time, but separated in frequency (e.g., via OFDMA), with each AP 106 addressing the STAs 102 within their own respective BSSs 250. The coordinated transmission can be preceded by a trigger frame transmitted by one of the APs 106. Based on the trigger frame, all the participating APs 106 can synchronize their carrier-frequency offsets (CFO) relative to the AP 106 that transmitted the trigger frame and synchronize the start-time of their coordinated transmissions.

In one aspect, system 200 can be a system for coordinated partial-rank nulling in multi AP transmissions or a system for simultaneous multi-AP transmissions with coordinated partial-rank nulling. System 200 can include any number of APs 106 that can have overlapping BSSs 250 and overlapping ranges 255 for wireless communications. For example, a first AP 106 can have a first set of (e.g., one or more) STAs 102 within a first BSS 250 (e.g., WLAN) of the first AP 106 and a second AP 106 can have a second set of STAs 102 (e.g., one or more STAs) within a second BSS 250. Each one of the first AP 106 and the second AP 106 can include one or more STAs 102 of the other BSS 250 (e.g., neighboring AP 106) within its own range 255 for wireless communication.

A first AP 106 can be configured to transmit, to a second AP 106, a first message. The first message can be transmitted by the coordinator 205 as a part of the coordination phase in which APs 106 either jointly gather information from STAs 102 belonging to either of their BSS, or individually gather information from STAs 102 in their own BSS 250 and exchange gathered information between APs 106. The first message can identify a first station 102 of the first AP 106 for which interference from the second AP 106 is to be partially nulled. The first station 102 can be a STA that is a part of the first BSS 250 of the first AP 106 (e.g., configured for wireless communication with the first AP 106 via a WLAN of the first AP 106).

The message can include a first direction in which the interference from the second AP 106 is partially nulled at the first station 102. For instance, the first message can include a quantity of a first set of directions in which interference from second AP at first station is to be partially or fully nulled. For example, the first message can include a first set of directions in which interference is to be partially or fully nulled. For example, the first message can cause the second AP to identify a first set of directions in which interference to the first station is to be partially or fully nulled.

The first direction or set of directions can be a set of one or more linearly independent vectors or directions along which transmissions from the second AP 106 can be reduced below a predetermined threshold (e.g., a threshold corresponding to a power or gain level of the signal or defined in accordance with a noise signal level). The first message can include location information (e.g., location of the STA with respect to the AP 106, coordinates of the STA with respect to AP 106, information on the or any other information corresponding to spatial orientation of the STA).

First AP 106 can receive, from the second AP 106, a second message. The second message can be transmitted by the coordinator 205 during the coordination phase of the first and second APs 106. The second message can identify a second station of the second AP for which interference from the first AP is to be partially nulled or fully nulled. The second message can include or identify a second direction in which the interference from the first AP is partially nulled or fully nulled at the second station 102. The second direction or set of directions can be a linearly independent vector or direction along which transmissions from the first AP 106 can be reduced below a predetermined threshold (e.g., a threshold corresponding to a power or gain level of the signal or defined in accordance with a noise signal level). The second message can include location information (e.g., location of the STA with respect to the AP 106, coordinates of the STA with respect to AP 106, information on the or any other information corresponding to spatial orientation of the STA).

First AP 106 can establish, set up, modify or configure one or more settings of the first AP 106. The one or more settings can be settings to establish or coordinate with the second AP 106 a time and a frequency of a transmission to the first station 102. The transmission can be a message, a request, a response to a request or a network data packet, such as a packet of a spatial data stream 240. The time can be a time at which the first AP 106 is to transmit the transmission to the first station 102. The time can be synchronized to be the same time as a transmission from the second AP 106 to a second station 102. The time can be synchronized to be different than the time at which the second AP 106 transmits the second transmission to the second station 102. The one or more settings can be for the first AP 106 to send or transmit the transmission to the second station 102 according to the second direction to partially or fully null the interference at the second station 102.

The first message can identify at least a first station 102 of the first AP 106 for which interference from the second AP 106 is to be nulled. The first message can identify at least a quantity of directions in which the interference is to be partially nulled at the first station. The first message can identify the directions in which the interference is to be partially nulled at the first station 102. first AP to the second station). Also, the receipt of the first message can cause the second AP to identify a set of directions along which the interference to the first station is to be partially nulled.

For example, the direction for partially nulling interference at a particular station can depend on which other stations 102 are receiving the signal at the same time since the beamforming vectors can be computed for the totality of all receiving stations 102, and not just individual stations in isolation. In such examples, while a message may identify the station 102 at which interference is to be nulled, it may or may not identify a fixed constant direction for interference-nulling for that particular station 102. For example, in some implementations the direction for nulling may not be indicated or signaled by either AP, but instead each AP can independently determine or infer the directions for nulling for different stations 102 based upon exchanging other information, such as the set of stations 102 with which each AP 106 intends to communicate, the number of directions in which interference is to be nulled at each station, directions or locations of stations or APs and similar. Such information taken together with information gathered about channels between the APs 106 and STAs 102 that was acquired by a prior channel sounding process, can be used to determine directions for nulling for each stations 102 independently.

First AP 106 can be configured to transmit, to the first station 102 at the time and the frequency of the setting, a first spatial stream 240 of data comprising the transmission. The first spatial stream 240 can be oriented so as to partially null the interference from the first AP at the second station along the second set of directions. For example, first AP 106 can beamform the first spatial stream 240 (e.g., including the transmission) to be transmitted along the spatial vector or direction orthogonal to the first direction at the second station 102. The first stream of data can be coordinated with a second stream of data transmitted by the second AP 106 to the second client 102 at the time and frequency (e.g., the coordinated time and frequency) with the second stream oriented to partially or fully null the interference from the second AP at the first station 102 along the first set of directions. For instance, the first stream of data can be coordinated with a second stream of data transmitted by the second AP to the second station at the time and frequency, with the second stream of data oriented to partially null the interference from the second AP at the first station along the first direction.

The first station 102 can be configured to receive wireless transmissions from the first AP via the wireless local area network (WLAN) of the first AP. The second station 102 can be configured to receive wireless transmissions from the second AP via the WLAN of the second AP. The first station 102 and the second station 102 can each be located within a first range 255 of the wireless transmissions from the first AP 106 and a second range 255 of the wireless transmissions from the second AP 106.

First AP 106 can be configured to determine, based at least on the second set of one or more directions, a spatial orientation of one or more antennas 220 of the first AP 106. The spatial orientation of the one or more antennas 220 of the first AP 106 can be determined based at least on the locations (e.g., coordinates or GPS locations) of the first station, the second station and/or the first AP 106. First AP 106 can be configured to beamform the transmission with respect to the first station 102 based at least on the spatial orientation of the one or more antennas 220 of the first AP 106.

First AP 106 can be configured to exchange, with the second AP 106, the time and the frequency for coordinating transmissions of the first AP with transmissions of the second AP. For example, coordinators 205 can exchange channel or bands at which to transmit communications to their STAs 102 as well as the timing and frequency of the transmissions and/or the phase of the transmissions with respect to each other. First AP 106 can be configured to coordinate transmissions to the first station 102 by the first AP 106 with transmissions to the second station by the second AP using the time and the frequency.

First AP 106 can be configured to receive a packet comprising information on the first client. The packet can include a network packet, a message or a transmission that can include information on the characteristics of the channels of the first station and/or the second station. First AP 106 can be configured to identify, from the received packet, information indicative of a spatial orientation of the first client with respect to the second AP. For example, the first AP 106 can determine linearly independent vectors at the STA 102 at which interferences at the STA 102 are partially or fully nulled. First AP 106 can be configured to determine the first set of one or more directions of the first client using the spatial orientation.

First AP 106 can be configured to receive, from the second AP 106, a third message. The third message can identify a third station 102 of the second AP 106 (e.g., STA 102 within the BSS 250 of the second AP 106) for which interference from the first AP 106 is to be partially or fully nulled. The third message can include a fourth direction to partially null the interference at the first station and along the third direction. First AP 106 can configure the one or more settings of the first AP 106 to coordinate with the second AP 106 the time and the frequency of the transmission to the first station to be sent according to the third set of one or more directions to partially null the interference at the third station. First AP 106 can form a beam for the transmission to the first station according to the second set of one or more directions to partially null the interference at the second station and according to the third set of one or more directions to partially null the interference at the third station.

First AP 106 can be configured to transmit, to the first station 102, a plurality of streams 240 comprising the transmission. The number of the streams 240 in the plurality of streams to be transmitted to the first station 102 may not exceed a number of antennas of the first station 102. The first AP can transmits, to a plurality of STAs comprising the first STA, a second plurality of streams comprising the plurality of streams. For example, a receiving STA 102 can have a number of receive antennas 220 that is not less than the number of spatial streams 240 directed to the receiving STA 102, while the receiving STA 102 can be exposed to a number of spatial streams 240 directed to all STAs within the range 255 of the AP 106 and therefore have interferences from more than the number of spatial streams 240 directed to the recipient STA 102.

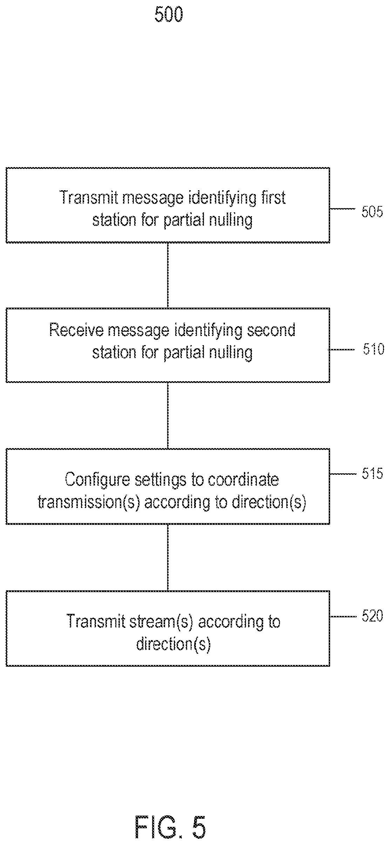

Referring now to FIG. 5, an example method 500 of coordinated partial rank nulling in a multiple AP and multiple STA environment is illustrated. Method 500 can be implemented, using for example, system 200 or any of the features discussed in connection with FIGS. 1A-4. Method 500 can include acts 505-520. At 505, the method can include generating or transmitting a message identifying first station for partial nulling. At 510, the method can include receiving a message identifying a second station for partial nulling. At 515, the method can include configuring settings to coordinate one or more transmissions according to one or more directions. At 520, the method can include transmitting one or more streams according to one or more directions.

At 505, the method can include generating or transmitting a message identifying first station for nulling, including full nulling or partial nulling of the interference signals. The method can include a first AP generating for, or transmitting to, a second AP a first message identifying a first station of the first AP for which interference from the second AP is to be partially or fully nulled. The first AP can transmit to the second AP the message including data on a plurality of stations of the BSS of the first AP to be partially nulled for transmissions of the second AP. The station or stations identified in the message can include stations determined to have interference from the second AP that is greater than a threshold. For example, the threshold can include a level of the background signal noise, or a factor (e.g., multiples) of the level of the background noise, such as 2, 3, 4, 5, 10 or more times the level of the background noise. The threshold can be, for example, defined in reference to other signals, such as for example the strength of the signals received (e.g., amplitude or power of received intended streams), such as, for example 1/2, 1/3, 1/4, or 1/8 of the strength, power or amplitude of the spatial stream directed to, and received by, the first station.

To identify the stations to have interferences partially or fully nulled, the first AP can transmit a message having one or more long-training fields (LTFs) to stations of the same BSS to determine the directions of the stations' respective intended streams and the directions in which the interference from APs can be reduced or minimized. For example, the first AP and the second AP can execute a coordination phase, during which the two APs can exchange messages to identify each receiving STA for which the interference is to be fully or partially nulled. The first and second APs can utilize their coordinators to facilitate or perform channel-sounding to stations within their BSSs. For example, a coordinator of an AP can facilitate, instruct or request each STA to measure one or more MIMO channels and provide or return their measurements. The relative phase-offsets across receive antennas for the stations can be maintained at constant values when measuring channels from different APs. The measurements of the MIMO channel for a sounding AP can be provided in a compressed beamforming report format (CBR), or in Cartesian form. The stations can provide linear transformation of the MIMO channel from an interfering AP. The linear transformation can be determined using measured MIMO channel between the STA and the first or the second AP. The linear transformation of the MIMO channel can include, represent or correspond to projection onto one or more eigen-models of the MIMO channel measured between the STA and the first AP (e.g., AP of STA's own BSS).

First AP can exchange (e.g., transmit or receive) with the second AP one or more null-data-packets (NDPs) which can be jointly or individually transmitted by the APs to the clients to perform simultaneous channel sounding. For instance, one AP can send all the NDPs to the STAs. For instance, multiple APs can send NDPs to their own STAs. The number of sounding dimensions in the NDP can include a total number of antennas across the APs. Prior to transmitting the NDPs, one or more NDP announcement (NDPA) frames can be transmitted. The first AP can transmit an NDPA on behalf of all APs performing channel sounding to all the stations between the first and the second BSSs. The first or the second AP can each send an NDPA simultaneously or sequentially to their own stations, such as at the same time but using different frequencies (e.g., via OFDMA). The first AP can utilize the coordinator to provide or facilitate trigger frames transmitted by the first AP, based on which all the APs participating in channel sounding can synchronize their carrier frequency offsets (CFOs) and the start time of their coordinated transmissions. Using the NDPAs and the NDPs, the first and the second APs can coordinate their coordination phase transmissions to have their STAs provide interference levels, to be exchanged by the APs.

The method can include the first AP transmitting to the second AP the first message including a first direction in which the interference from the second AP is partially or fully nulled at the first station. The first message can include information or data of the first station, such as information indicative of location of the first station (e.g., GPS data or coordinates, location of the first station with respect to the first AP and/or location of the first station with respect to the second AP). The first message can include a direction or a linearly independent direction or vector along which data received at the first AP has its gain, power or strength of the signal minimized reduced below an acceptable interference threshold level. For example, the direction of nulling can depend on which other stations are simultaneous recipients. For example, direction of nulling can be determined for a plurality of STAs within the range of the transmitting AP. Directions can be directly communicated to STAs or APs or can be determined by each of the APs on their own.

At 510, the method can include receiving a message identifying a second station for nulling or partial nulling. The method can include the first AP receiving from the second AP a second message identifying a second station of the second AP for which interference from the first AP is to be partially or fully nulled. The method can include the first AP receiving from the second AP the second message including a direction such that the interference from the first AP is partially nulled at the second station.

The second AP can transmit to the first AP the message including data on a plurality of stations of the BSS of the second AP to be partially nulled for transmissions of the first AP. The station or stations identified in the second message can include stations determined to have interference from the first AP that is greater than a threshold. For example, the threshold can include a level of the background signal noise, or a factor (e.g., multiples) of the level of the background noise, such as 2, 3, 4, 5, 10 or more times the level of the background noise. The threshold can be, for example, defined in reference to other signals, such as for example the strength of the signals received (e.g., amplitude or power of received intended streams), such as, for example 1/2, 1/3, 1/4, or 1/8 of the strength, power or amplitude of the spatial stream directed to, and received by, the second station.

As with the first AP in 505, to identify the stations to have interferences partially or fully nulled, the second AP can transmit a message having one or more long-training fields (LTFs) to stations of the same BSS to determine the directions of the stations' respective intended streams and the directions in which the interference from APs can be reduced or minimized. The first AP and the second AP can execute a coordination phase, during which the two APs can exchange messages to identify each receiving STA for which the interference is to be fully or partially nulled. The first and second APs can utilize their coordinators to facilitate or perform channel-sounding to stations within their BSSs, where a coordinator of an AP can facilitate, instruct or request each STA to measure one or more MIMO channels and provide or return their measurements. The relative phase-offsets across receive antennas for the stations can be maintained at constant values when measuring channels from different APs. The measurements of the MIMO channel for a sounding AP (e.g., first or second AP) can be provided in a compressed beamforming report format (CBR), or in Cartesian form. The stations can provide linear transformation of the MIMO channel from an interfering AP. The linear transformation can be determined using measured MIMO channel between the STA and the first or the second AP. The linear transformation of the MIMO channel can include, represent or correspond to projection onto one or more eigen-models of the MIMO channel measured between the STA and the first AP (e.g., AP of STA's own BSS).

Second AP can exchange (e.g., transmit or receive) with the first AP one or more null-data-packets (NDPs) which can be jointly or individually transmitted by the APs to the client to perform simultaneous channel sounding. For instance, one AP can send all the NDPs to the STAs. For instance, multiple APs can send NDPs to their own STAs. The number of sounding dimensions in the NDP can include a total number of antennas across the APs. Prior to transmitting the NDPs, one or more NDP announcement (NDPA) frames can be transmitted. The second AP can transmit an NDPA on behalf of all APs performing channel sounding to all the stations between the first and the second BSSs. The first or the second AP can each send an NDPA simultaneously or sequentially to their own stations, such as at the same time but using different frequencies (e.g., via OFDMA). The second AP can utilize the coordinator to provide or facilitate trigger frames transmitted by the first or the second AP, based on which all the APs participating in channel sounding can synchronize their carrier frequency offsets (CFOs) and the start time of their coordinated transmissions. Using the NDPAs and the NDPs, the first and the second APs can coordinate their coordination phase transmissions to have their STAs provide interference levels, to be exchanged by the APs.

The first station can be configured to receive wireless transmissions from the first AP via the wireless local area network (WLAN) of the first AP. The second station can be configured to receive wireless transmissions from the second AP via the WLAN of the second AP. The first station and the second station can each be located within a first range of the wireless transmissions from the first AP and a second range of the wireless transmissions from the second AP.

The method can include the first AP exchanging, with the second AP, the time and the frequency for coordinating transmissions of the first AP with transmissions of the second AP. The method can include the first AP coordinating transmissions to the first station by the first AP with transmissions to the second station by the second AP using the time and the frequency. The method can include the first AP receiving a packet comprising information on the first station. The first AP can identify, from the packet, information indicative of a spatial orientation of the first station with respect to the second AP. The first AP can determine the first direction of the first station using the spatial orientation.

At 515, the method can include determining, responsive at least to the second message, a first direction in which the interference at the first station from the second AP is partially nulled and a second direction in which the interference at the second station from the first AP is partially nulled. The first AP can determine the first direction in which the interference at the first station is partially nulled based at least on the data or information determined from channel sounding of the first station. The first or the second AP can determine the second direction in which the interference at the second station of the second AP is partially nulled based at least on the data or information determined from channel sounding of the second station. The method can include configuring settings to coordinate one or more transmissions according to one or more directions. The method can include the first AP configuring one or more settings of the first AP to coordinate with the second AP a time and a frequency of a transmission to the first station to be sent according to the second direction to partially null the interference at the second station.

The method can include the first AP coordinating the first stream of data with a second stream of data transmitted by the second AP to the second station at the time and frequency along the first direction to partially null the interference from the second AP at the first station. For instance, the first AP can coordinate to transmit a first spatial stream to a first station of the first BSS (e.g., BSS of the first AP) at the same time and at the same frequency as the second AP is to transmit second spatial stream to a second station of the second BSS (e.g., BSS of the second AP).

The method can include the first AP determining, based at least on the second direction, a spatial orientation of one or more antennas of the first AP. The method can include the first AP beamforming the transmission with respect to the first station based at least on the spatial orientation. For instance, upon determining the direction in accordance with which to transmit the transmission to the first station so as to partially null the interference of that transmission at the second station, the first AP can beamform the beam for transmitting the transmission according to the direction at which the interference at the second station is to be partially nulled.

At 520, the method can include transmitting one or more streams according to one or more directions. The method can include transmitting, by the first AP to the first station at the time and the frequency, a first spatial stream of data comprising the transmission, the first spatial stream of data oriented to partially null the interference from the first AP at the second station along the second direction. For example, the first AP can form the beam for transmitting the transmission to the first station according to the direction at which the interference at the second station is to be reduced. The first AP can transmit the transmission to the first station in accordance with such beamforming of the transmission.

The method can include the first AP receiving, from the second AP, a third message identifying a third station of the second AP for which interference from the first AP is to be partially nulled. The third message can include a fourth direction such that the interference from the first AP is partially nulled at the third station. The method can include the first AP configuring the one or more settings of the first AP to coordinate with the second AP the time and the frequency of the transmission to the first station to be sent according to the third direction to partially null the interference at the third station. The method can include the first AP forming a beam for the transmission to the first station according to the second direction to partially null the interference at the second station and according to the third direction to partially null the interference at the third station.

The method can include the first AP transmitting, to the first station, a plurality of streams comprising the transmission. A number of the plurality of streams may not exceed a number of antennas of the first station. The first AP can transmit, to a plurality of stations comprising the first station, a second plurality of streams comprising the plurality of streams.

References to "or" may be construed as inclusive so that any terms described using "or" may indicate any of a single, more than one, and all of the described terms. References to at least one of a conjunctive list of terms may be construed as an inclusive OR to indicate any of a single, more than one, and all of the described terms. For example, a reference to "at least one of 'A' and 'B'" can include only 'A', only 'B', as well as both 'A' and 'B'. Such references used in conjunction with "comprising" or other open terminology can include additional items.

It should be noted that certain passages of this disclosure can reference terms such as "first" and "second" in connection with subsets of transmit spatial streams, sounding frames, response, and devices, for purposes of identifying or differentiating one from another or from others. These terms are not intended to merely relate entities (e.g., a first device and a second device) temporally or according to a sequence, although in some cases, these entities can include such a relationship. Nor do these terms limit the number of possible entities (e.g., STAs, APs, beamformers and/or beamformees) that can operate within a system or environment. It should be understood that the systems described above can provide multiple ones of any or each of those components and these components can be provided on either a standalone machine or, in some embodiments, on multiple machines in a distributed system. Further still, bit field positions can be changed, and multibit words can be used. In addition, the systems and methods described above can be provided as one or more computer-readable programs or executable instructions embodied on or in one or more articles of manufacture, e.g., a floppy disk, a hard disk, a CD-ROM, a flash memory card, a PROM, a RAM, a ROM, or a magnetic tape. The programs can be implemented in any programming language, such as LISP, PERL, C, C++, C#, or in any byte code language such as JAVA. The software programs or executable instructions can be stored on or in one or more articles of manufacture as object code.

While the foregoing written description of the methods and systems enables one of ordinary skill to make and use embodiments thereof, those of ordinary skill will understand and appreciate the existence of variations, combinations, and equivalents of the specific embodiment, method, and examples herein. The present methods and systems should therefore not be limited by the above described embodiments, methods, and examples, but by all embodiments and methods within the scope and spirit of the disclosure.

## Claims

1. A system comprising:
a first access point (AP) configured to:
generate, for a second AP, a first message, the first message identifying a first station of the first AP for which interference from the second AP is to be partially nulled;
receive, from the second AP, a second message identifying a second station of the second AP for which interference from the first AP is to be partially nulled;
determine, responsive at least to the second message, a first direction in which the interference at the first station from the second AP is partially nulled and a second direction in which the interference at the second station from the first AP is partially nulled; and
configure one or more settings of the first AP to coordinate with the second AP a time and a frequency of a transmission to the first station to be transmitted according to the second direction to partially null the interference at the second station.

2. The system of claim 1, wherein the first AP is configured to:
transmit, to the first station at the time and the frequency, a first spatial stream of data comprising the transmission, the first spatial stream of data oriented along a third direction to partially null the interference at the second station and along the second direction.

3. The system of claim 2, wherein
the first stream of data is coordinated with a second stream of data transmitted by the second AP to the second station at the time and frequency along a fourth direction to partially null the interference at the first station and along the first direction.

4. The system of any one of the claims 1 to 3, wherein
the first station is configured to receive wireless transmissions from the first AP via the wireless local area network (WLAN) of the first AP;
the second station is configured to receive wireless transmissions from the second AP via the WLAN of the second AP; and
the first station and the second station are each located within a first range of the wireless transmissions from the first AP and a second range of the wireless transmissions from the second AP.

5. The system of any one of the claims 1 to 4, wherein
the first AP is configured to transmit, to the first station at the time and the frequency, a first spatial stream of data comprising the transmission, the first spatial stream of data oriented along a third direction to partially null the interference at the second station and along the second direction; and wherein
the second AP is configured to transmit, to the second station at the time and the frequency, a second spatial stream of data comprising a second transmission, the second spatial stream of data oriented along a fourth direction to partially null the interference at the first station and along the first direction.

6. The system of any one of the claims 1 to 5, wherein the first AP is configured to
exchange, with the second AP, the time and the frequency for coordinating transmissions of the first AP with transmissions of the second AP; and
coordinate transmissions to the first station by the first AP with transmissions to the second station by the second AP using the time and the frequency.

7. The system of any one of the claims 1 to 6, wherein the first AP is configured to
receive a packet comprising information on the first station;
identify, from the packet, information indicative of a spatial orientation of the first station with respect to the second AP; and
determine the first direction of the first station using the spatial orientation.

8. The system of any one of the claims 1 to 7, wherein the first AP is configured to
receive, from the second AP, a third message identifying a third station of the second AP for which interference from the first AP is to be partially nulled and a third direction in which the interference from the first AP is partially nulled at the third station; and
configure the one or more settings of the first AP to coordinate with the second AP the time and the frequency of the transmission to the first station to be sent according to a fourth direction to partially null the interference at the third station and along the third direction.

9. The system of any one of the claims 1 to 8, wherein the first AP is configured to:
form a beam for the transmission to the first station to partially null the interference at the second station along the second direction.

10. The system of any one of the claims 1 to 9, wherein the first AP is configured to
transmit, to the first station, a plurality of streams intended for the first station, , wherein a number of the plurality of streams does not exceed a number of antennas of the first station, wherein the first AP transmits, to a plurality of stations comprising the first station, a second plurality of streams comprising the plurality of streams, wherein the transmission comprises the second plurality of streams.

11. A method comprising
generating, by a first access point (AP) for to a second AP, a first message identifying a first station of the first AP for which interference from the second AP is to be partially nulled;
receiving, by the first AP from the second AP, a second message identifying a second station of the second AP for which interference from the first AP is to be partially nulled;
determining, responsive at least to the second message, a first direction in which the interference at the first station from the second AP is partially nulled and a second direction in which the interference at the second station from the first AP is partially nulled; and
configuring, by the first AP, one or more settings of the first AP to coordinate with the second AP a time and a frequency of a transmission to the first station to be sent according to the second direction to partially null the interference at the second station;

12. The method of claim 11, comprising
transmitting, by the first AP to the first station at the time and the frequency, a first spatial stream of data comprising the transmission, the first spatial stream of data oriented along a third direction to partially null the interference at the second station and along the second direction;
wherein in particular
the method further comprises
coordinating, by the first AP, the first stream of data with a second stream of data transmitted by the second AP to the second station at the time and frequency along a fourth direction to partially null the interference at the first station and along the first direction; and wherein
the first station is configured to receive wireless transmissions from the first AP via the wireless local area network (WLAN) of the first AP,
the second station is configured to receive wireless transmissions from the second AP via the WLAN of the second AP, and
the first station and the second station are each located within a first range of the wireless transmissions from the first AP and a second range of the wireless transmissions from the second AP.

13. The method of claim 11 or 12, comprising
transmitting, by the first AP, to the first station at the time and the frequency, a first spatial stream of data comprising the transmission, the first spatial stream of data oriented along a third direction to partially null the interference at the second station and along the second direction;
transmitting, by the second AP, to the second station at the time and the frequency, a second spatial stream of data comprising a second transmission, the second spatial stream of data oriented along a fourth direction to partially null the interference at the first station and first the second direction;
and/or comprising
exchanging, by the first AP with the second AP, the time and the frequency for coordinating transmissions of the first AP with transmissions of the second AP; and
coordinating, by the first AP, transmissions to the first station by the first AP with transmissions to the second station by the second AP using the time and the frequency;
and/or comprising
receiving, by the first AP, a packet comprising information on the first station; identifying, by the first AP, from the packet, information indicative of a spatial orientation of the first station with respect to the second AP; and
determining, by the first AP, the first direction of the first station using the spatial orientation.

14. The method of any one of the claims 11 to 13, comprising
receiving, by the first AP from the second AP, a third message identifying a third station of the second AP for which interference from the first AP is to be partially nulled and a third direction in which the interference from the first AP is partially nulled at the third station; and
configuring, by the first AP, the one or more settings of the first AP to coordinate with the second AP the time and the frequency of the transmission to the first station to be sent according to a fourth direction to partially null the interference at the third station and along the third direction; and
forming, by the first AP, a beam for the transmission to the first station according to the second direction to partially null the interference at the second station and according to the third direction to partially null the interference at the third station;
and/or comprising
transmitting, by the first AP to the first station, a plurality of streams intended for the first station, wherein a number of the plurality of streams does not exceed a number of antennas of the first station, wherein the first AP transmits, to a plurality of stations comprising the first station, a second plurality of streams comprising the plurality of streams, wherein the transmission comprises the second plurality of streams.

15. A non-transitory computer-readable medium storing instructions that, when executed by at least one processor of a first access point (AP), cause the at least one processor to
transmit, to a second AP, a first message identifying a first station of the first AP for which interference from the second AP is to be partially nulled;
receive, from the second AP, a second message identifying a second station of the second AP for which interference from the first AP is to be partially nulled;
determine, responsive at least to the second message, a first direction in which the interference at the first station from the second AP is partially nulled and a second direction in the interference at the second station from the first AP is partially nulled; and
configure one or more settings of the first AP to coordinate with the second AP a time and a frequency of a transmission to the first station to be sent according to the second direction to partially null the interference at the second station.
